# EUROPÄISCHE PATENTSCHRIFT

(11) **EP 2 316 195 B1**
(45) Veröffentlichungstag und Bekanntmachung des Hinweises auf die Patenterteilung: **04.01.2012**
(21) Anmeldenummer: 09781422.2
(22) Anmeldetag: 03.08.2009
(51) Int. Cl.: H04L 12/40, G08C 19/30, G06F 13/10

(54) **VORRICHTUNG ZUM BEDIENEN EINES FELDGERÄTS, DAS IN EIN FUNKNETZWERK DER AUTOMATISIERUNGSTECHNIK EINGEBUNDEN IST**
APPARATUS FOR CONTROLLING A FIELD DEVICE WHICH IS LINKED INTO A RADIO NETWORK FOR AUTOMATION ENGINEERING
DISPOSITIF POUR COMMANDER UN APPAREIL DE TERRAIN QUI EST INTÉGRÉ DANS UN RÉSEAU RADIOÉLECTRIQUE EN AUTOMATISME

(30) Priorität: 11.08.2008 DE 102008037195
(43) Veröffentlichungstag der Anmeldung: 04.05.2011
(73) Patentinhaber: Endress + Hauser Process Solutions AG, 4153 Reinach BL (CH)
(72) Erfinder: PROBST, Stefan, 79576 Weil am Rhein (DE); SEILER, Christian, 79424 Auggen (DE); THOREN, Werner, 79585 Steinen (DE); LAIBLE, Ingo, CH-4144 Arlesheim (CH)
(74) Vertreter: Andres, Angelika Maria
(86) Internationale Anmeldenummer: PCT/EP2009/060032
(87) Internationale Veröffentlichungsnummer: WO 2010/018097

(56) Entgegenhaltungen:
- EP-A- 1 840 682
- EP-A- 1 925 918
- DE-A1-102004 009 563

## Beschreibung

Die Erfindung betrifft eine Vorrichtung zum Bedienen eines Feldgeräts oder eines Wireless Adapters, das bzw. der in ein Funknetzwerk der Automatisierungstechnik eingebunden ist, wobei an dem Feldgerät eine Kommunikationsschnittstelle angebracht ist, wobei ein Wireless-Adapter über eine Verbindungsleitung an die Kommunikationsschnittstelle des Feldgeräts angeschlossen ist, wobei dem Wireless-Adapter eine erste Versorgungseinheit zugeordnet ist, und wobei der Wireless-Adapter das Feldgerät über die Verbindungsleitung und die Kommunikations-schnittstelle mit elektrischer Leistung versorgt.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Registriergeräte werden genutzt, um Prozessvariablen zu visualisieren. Als Feldgeräte werden im Prinzip alle Geräte bezeichnet, die prozessnah eingesetzt werden und die prozessrelevante Informationen liefern oder verarbeiten. Eine Vielzahl solcher Feldgeräte wird von der Firma Endress + Hauser hergestellt und vertrieben.

In modernen Industrieanlagen sind Feldgeräte in der Regel über Bussysteme (Profibus®, Foundation Fieldbus®, HART®, etc.) mit übergeordneten Einheiten verbunden. Normalerweise handelt es sich bei den übergeordneten Einheiten um Leitsysteme bzw. Steuereinheiten, wie beispielsweise SPS (speicherprogrammierbare Steuerung) oder PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfigurierung und Parametrierung von Feldgeräten, zu Diagnosezwecken sowie zur Ansteuerung von Aktoren.

Neben einer drahtgebundenen Datenübertragung zwischen den Feldgeräten und der übergeordneten Einheit besteht auch die Möglichkeit einer drahtlosen (wireless) Datenübertragung. Insbesondere in den Bussystemen Profibus®, Foundation Fieldbus® und HART® ist eine drahtlose Datenübertragung über Funk spezifiziert. Ferner sind Funknetzwerke für Feldgeräte in dem Standard IEEE 802.15.4 näher spezifiziert. Zur Realisierung einer drahtlosen Datenübertragung sind neuere Feldgeräte, insbesondere Sensoren und Aktoren, teilweise als Funk-Feldgeräte ausgebildet. Diese weisen in der Regel eine Funkeinheit und eine Energiequelle, die eine autarke Energieversorgung des Feldgerätes ermöglicht, als integralen Bestandteil auf.

Daneben besteht die Möglichkeit, Feldgeräte ohne Funkeinheit, insbesondere Sensoren und Aktoren, durch Anschluss an einen Wireless Adapter; der eine Funkeinheit aufweist, zu einem Funk-Feldgerät aufzurüsten. Ein Wireless Adpater ist also eine Einheit, durch die ein "herkömmliches" Feldgerät, das lediglich für einen drahtgebundenen Anschluss an einen Feldbus ausgelegt ist, zu einem Funk-Feldgerät erweitert werden kann. Beispielsweise ist in der Druckschrift WO 2005/103851 A1 solch ein Wireless Adapter beschrieben. Der Wireless Adapter wird an eine Kommunikationsschnittstelle, insbesondere an eine Feldbus-Kommunikationsschnittstelle, des Feldgerätes angeschlossen, wobei die Verbindung zwischen Wireless Adapter und Feldgerät in der Regel lösbar ist. Über die Feldbus-Kommunikations-schnittstelle kann das Feldgerät die über das Bussystem zu übermittelnden Daten an den Wireless Adapter senden, der diese dann über Funk an den Zielort, z.B. an eine übergeordnete Steuereinheit, übermittelt. Umgekehrt kann der Wireless Adapter über Funk Daten von der Steuereinheit empfangen und über die Feldbus-Kommunikationsschnittstelle an das Feldgerät weiterleiten. Die Versorgung des Feldgerätes mit elektrischer Leistung erfolgt in der Regel über eine Energiequelle des Wireless Adapters.

Jedes Feldgerät wird durch eine Vielzahl von Parametern beschrieben. Zum Teil sind diese von dem Hersteller des Feldgerätes voreingestellt und/oder können durch den Anwender eingestellt, insbesondere geändert, aktiviert und/oder deaktiviert werden. Parameter eines Feldgerätes sind beispielsweise Messbereiche, Grenzwerte, Einheiten, etc.. In entsprechender Weise sind auch in einem Wireless Adapter Parameter vorgesehen. Parameter des Wireless Adapters sind beispielsweise Parameter, die sich auf den Betrieb des Wireless Adapters in einem drahtlosen Netzwerk beziehen, wie beispielsweise ein Netzwerkschlüssel oder eine Netzwerk ID (Netzwerk Identifikation). Weiterhin sind in der Regel in einem Wireless Adapter Parameter vorgesehen, die sich auf den Betrieb des Wireless Adapters in Kombination mit dem daran angeschlossenen Feldgerät beziehen, wie beispielsweise eine minimale Spannungsversorgung des Feldgerätes oder eine "Duty Cycle Rate", die angibt, in welchen Zeitabständen durch das Feldgerät ein Messwert aufzunehmen ist und dementsprechend das Feldgerät zu aktivieren und mit ausreichend elektrischer Leistung zu versorgen ist. Üblicherweise wird also das Feldgerät zwecks Energieeinsparung in einem intermittierenden Modus betrieben, in dem sich Betriebs- und Ruhephasen abwechseln. Ferner können durch einen Wireless Adapter weitere Größen erfasst werden, wie beispielsweise die Signalqualität eines empfangenen Signals oder weitere Verbindungsinformationen zu Nachbarknoten des drahtlosen Netzwerkes. Diese Werte werden üblicherweise ebenfalls als Parameter, insbesondere als erfasste Parameter bezeichnet.

Zur Inbetriebnahme des Systems aus Feldgerät und dem mit dem Feldgerät verbundenen Wireless Adapter ist es in der Regel erforderlich, dass sowohl die Parameter des Feldgerätes als auch die Parameter des Wireless Adapters der jeweiligen Anwendung entsprechend eingestellt werden. Auch während des Betriebs kann ein Einstellen von Parametern des Feldgerätes und/oder des Wireless Adapters erforderlich sein. Dieses Einstellen, insbesondere Ändern, Aktivieren und/oder Deaktivieren, von Parametern wird auch als Parametrierung und/oder Konfigurierung bezeichnet. Eine visuelle Anzeige der aktuell eingestellten und/oder erfassten Parameter erleichtert es dem Benutzer, sich über die aktuellen Einstellungen und den aktuellen Betriebszustand des Feldgerätes und des Wireless Adapters zu informieren.

Feldgeräte weisen oftmals eine in das Feldgerät integrierte Bedieneinheit auf, welche unter anderem das Einstellen von Parametern, die in dem Feldgerät vorgesehen sind, oder das Durchführen einer Diagnose direkt am Einsatzort des betreffenden Feldgerätes ermöglicht. Oftmals ist die Bedieneinheit als Anzeige- und Bedieneinheit ausgebildet und umfasst neben einer manuellen Eingabeeinrichtung, wie beispielsweise einem Tastenfeld, auch eine Anzeigeeinheit, die z.B. die Eingabe von Parametern über die Bedieneinheit durch eine entsprechende graphisch dargestellte Menüführung erleichtert. Auf der Anzeigeeinheit können ferner Parameter, wie beispielsweise die jeweils aktuell eingestellten Parameter und/oder die durch das Feldgerät erfassten Parameter (bzw. Werte), wie beispielsweise Messwerte, dargestellt werden.

Ferner besteht die Möglichkeit, Parameter eines Feldgerätes von einer übergeordneten Einheit aus einzustellen und auf einer Anzeige derselben anzuzeigen. Hierzu ist in der übergeordneten Einheit in der Regel ein Bedienprogramm (Bedientool) vorgesehen (z.B. FieldCare® von Endress+Hauser ®), durch das in der Regel eine graphische Benutzeroberfläche bereitgestellt wird. Ferner sind über ein derartiges Bedienprogramm in der Regel die jeweils aktuell eingestellten und/oder erfassten Parameter auf einer Anzeige der übergeordneten Einheit darstellbar und es wird die Möglichkeit bereitgestellt, Parameter des Feldgerätes einzustellen. Die übergeordnete Einheit kann dabei direkt an dem Feldbus, an dem das betreffende Feldgerät angeschlossen ist, oder an einem übergeordneten Kommunikationsnetzwerk angeschlossen sein.

Daneben können Parameter eines Feldgerätes auch durch ein Bediengerät, wie beispielsweise durch einen tragbaren Personal-Computer (Laptop), ein tragbares Handbediengerät (Handheld), einen PDA (engl.: Personal Digital Assistant; deutsch: Persönlicher Digitaler Assistent), etc., auf dem ein Bedienprogramm (Bedientool) implementiert ist, eingestellt werden. Ferner können über das Bedienprogramm die jeweils aktuell eingestellten und/oder erfassten Parameter auf einem Display des Bediengerätes dargestellt werden. Das Bediengerät kann dabei über den Feldbus, an dem das zu parametrierende Feldgerät angeschlossen ist, oder direkt über eine entsprechende, an dem Feldgerät vorgesehene Service-Schnittstelle mit dem Feldgerät kommunizieren. Durch ein Bedienprogramm, das in einer übergeordneten Steuereinheit bzw. in einem Bediengerät implementiert ist, werden oftmals mehr Anzeigeoptionen, Statusanzeigen und Auswerteoptionen bereitgestellt, als dies bei einer Bedienung über eine Anzeige- und Bedieneinheit direkt am Feldgerät möglich ist.

In gleicher Weise besteht grundsätzlich auch die Möglichkeit, Parameter eines Wireless Adapters über eine übergeordnete Steuereinheit, über ein Bediengerät und/oder über eine an dem Wireless Adapter vorgesehene Anzeige- und Bedieneinheit einzustellen und/oder anzuzeigen. Um eine Bedienung des Wireless Adapters, insbesondere ein Einstellen und/oder Anzeigen mindestens eines Parameters des Wireless Adapters, vor Ort zu ermöglichen, ist in diesem Fall erforderlich, dass der Wireless Adapter mit einer entsprechenden Service- oder Kommunikationsschnittstelle (für eine Bedienung über ein Bediengerät) und/oder mit einer entsprechenden Anzeige- und Bedieneinheit (für eine direkte Bedienung über die Anzeige- und Bedieneinheit) ausgestattet ist. Während des Bedienvorgangs muss der Wireless Adapter die benötigte Energie zur Kommunikation mit dem Feldgerät zur Verfügung stellen, was zu einer starken Belastung der Versorgungseinheit des autarken Wireless Adapters führt und dessen Standzeit erheblich herabsetzt.

Ferner zeigt die Offenlegungsschrift EP 1925918 A2 eine Anschlussbox, die zum Übertragen von Signalen zwischen einem Feldgerät und einem Bediengerät dient, wobei die Anschlussbox einen Feldgeräteanschluss und einen Schnittstellenanschluss aufweist, wobei der Feldgeräteanschluss und der Schnittstellenanschluss zur Übertraqunfl von Signalen kommunizierfähig miteinander gekoppelt sind. Gemäß einer Ausführungsform der EP 1925918 A2 weist die Anschlussbox eine Energieversorgung zur autarken Versorgung eines an den Schnittstellenanschluss anschließbaren Schnittstellenadapters auf.

Der Erfindung liegt die Aufgabe zugrunde, eine Vorrichtung vorzuschlagen, die die Belastung der Versorgungseinheit des Wireless Adapters oder des Feldgeräts während eines Bedienvorgangs minimiert.

Die Aufgabe wird in einer ersten Ausgestaltung des erfindungsgemäßen Verfahrens dadurch gelöst, dass ein Bediengerät mit einer zweiten Versorgungseinheit vorgesehen ist, das zwecks Bedienen des Feldgeräts mit der Verbindungsleitung zwischen Feldgerät und Wireless-Adapter verbindbar, insbesondere an die Verbindungsleitung anklemmbar ist, und dass ein Schalter vorgesehen ist, der im Falle eines an dem Feldgerät oder an dem Wireless Adapter durchzuführenden bzw. durchgeführten Bedienvorgangs die Energieversorgung des Feldgeräts über den Wireless-Adapter unterbricht und die zweite Versorgungseinheit aktiviert, so dass während des Bedienvorgangs die Energieversorgung des Feldgeräts über das Bediengerät erfolgt.

Eine alternative Variante der erfindungsgemäßen Vorrichtung sieht vor, dass der Wireless-Adapter eine zusätzliche Kommunikations- oder Service-Schnittstelle besitzt, dass ein Bediengerät mit einer zweiten Versorgungseinheit vorgesehen ist, das zwecks Bedienen des Feldgeräts an die Kommunikationsschnittstelle des Wireless-Adapter anklemmbar ist, und dass eine Steuerung vorgesehen ist, die im Falle eines an dem Feldgerät oder dem Wireless Adapter durchzuführenden bzw. durchgeführten Bedienvorgangs die Energieversorgung des Feldgeräts über den Wireless-Adapter drosselt oder unterbricht und die zweite Versorgungseinheit aktiviert, so dass während des Bedienvorgangs die Energieversorgung des Feldgeräts zumindest teilweise über das Bediengerät erfolgt.

Grob gesprochen, wird durch die Erfindung die Energieversorgung des Feldgeräts durch den Wireless Adapter aufgetrennt und das Feldgerät oder auch der Wireless Adapter wird während des Energieintensiven Bedienvorgangs von dem Bediengerät oder alternativ von einem Modem her gespeist. Das Bediengerät oder auch das Modem wird hierzu quasi in einen aktiven speisenden Modus geschaltet, während die Versorgungseinheit des Wireless Adapters von der Energieversorgung abgetrennt wird.

Durch die Erfindung wird die Inbetriebnahme, die Bedienung oder auch die Diagnose einer drahtlosen Messstelle, bestehend aus Feldgerät und Wireless Adapter, dahingehend optimiert, dass die Versorgungseinheit, üblicherweise die Batterie, des Wireless Adapter während eines Bedienvorgangs nahezu bzw. völlig unbelastet ist. Hierdurch kann sichergestellt werden, dass die Standzeit der Versorgungseinheit des Wireless Adapters im Wesentlichen durch den gewöhnlichen Messbetrieb bestimmt ist.

Eine vorteilhafte Weiterbildung der zuvor beschriebenen Alternativen der erfindungsgemäßen Vorrichtung sieht vor, dass es sich bei der Verbindungsleitung zwischen Wireless-Adapter und Feldgerät um eine erste Zweidrahtleitung handelt, wobei die Kommunikation und die Energieversorgung über diese erste Zweidrahtleitung erfolgen.

Weiterhin wird in diesem Zusammenhang vorgeschlagen, dass das Bediengerät über eine zweite Zweidrahtleitung an die erste Zweidrahtleitung angeklemmt ist und dass die Kommunikation und die Energieversorgung über die erste und die zweite Zweidrahtleitung erfolgen.

Gemäß einer vorteilhaften Weiterbildung der beiden Alternativen der erfindungsgemäßen Vorrichtung weist das Bediengerät eine Zweidrahtleitung auf, die an eine Kommunikationsschnittstelle des Wireless Adapters angeklemmt ist. Kommunikation und Energieversorgung erfolgen über diese Zweidrahtleitung.

Eine vorteilhafte Ausgestaltung der beiden Varianten der erfindungsgemäßen Vorrichtung schlägt vor, dass das Bediengerät eine Vierdrahtleitung aufweist, wobei zwei Kommunikationsleitungen an die erste Zweidrahtleitung angeklemmt sind. Zwei weitere Versorgungsleitungen sind über eine Schnittstelle mit dem Wireless-Adapter verbunden sind, so dass die Kommunikation und die Energieversorgung über zwei getrennte Leitungspaare erfolgen.

Im Zusammenhang mit der Erfindung wird es darüber hinaus als vorteilhafte erachtet, dass ein Funkmodul zur Kommunikation über das Funknetzwerk vorgesehen ist, wobei das Funkmodul in das Feldgerät oder - im Falle der Verwendung eines Wireless Adapters - in den Wireless-Adapter integriert ist.

Bei dem Bediengerät handelt es sich um ein Handheld oder um ein Modem.

Wie bereits zuvor erwähnt, handelt es sich bei dem Bedienvorgang um einen Vorgang mit hohem Leistungsverbrauch, insbesondere um eine Inbetriebnahme des Feldgeräts, um eine Parametrierung bzw. Konfigurierung des Feldgeräts oder um eine an dem Feldgerät durchgeführte Diagnose handelt.

Bei der ersten Versorgungseinheit und/oder bei der zweiten Versorgungseinheit handelt es sich um eine Batterie, einen Akku oder eine Brennstoffzelle.

Zwecks Umschaltung von der Speisung des Feldgeräts durch die erste Versorgungseinheit auf die Speisung des Feldgeräts durch die zweite Versorgungseinheit wird ein mechanischer oder ein elektronischen Schalter betätigt. Darüber hinaus schaltet die Steuerung nach Beendigung des Bedienvorgangs die Speisung des Feldgeräts wieder auf die erste Versorgungseinheit um.

Eine weitere Lösung der Aufgabe sieht vor, dass ein Bediengerät mit einer zweiten Energieversorgungseinheit vorgesehen ist, wobei das Bediengerät zwecks Bedienen des Feldgeräts an die Kommunikations-schnittstelle des Feldgeräts anklemmbar ist, und dass eine Steuerung vorgesehen ist, die im Falle eines an dem Feldgerät durchzuführenden bzw. durchgeführten Bedienvorgangs die Energieversorgung des Feldgeräts über die erste Versorgungseinheit drosselt oder unterbricht und die zweite Versorgungseinheit aktiviert, so dass während des Bedienvorgangs die Energieversorgung des Feldgeräts zumindest teilweise über das Bediengerät erfolgt. Bei dieser Lösung ist die erste Energieversorgungseinheit in das Feldgerät integriert. Es handelt sich um ein autarkes Feldgerät ohne Wireless Adapter.

Die Erfindung wird anhand der nachfolgenden Figuren näher erläutert. Es zeigt:
Fig. 1: eine schematische Darstellung einer ersten Ausgestaltung der erfindungsgemäßen Vorrichtung,
Fig. 2: eine schematische Darstellung einer zweiten Ausgestaltung der erfindungsgemäßen Vorrichtung und
Fig. 3: eine schematische Darstellung einer dritten Ausgestaltung der erfindungsgemäßen Vorrichtung.

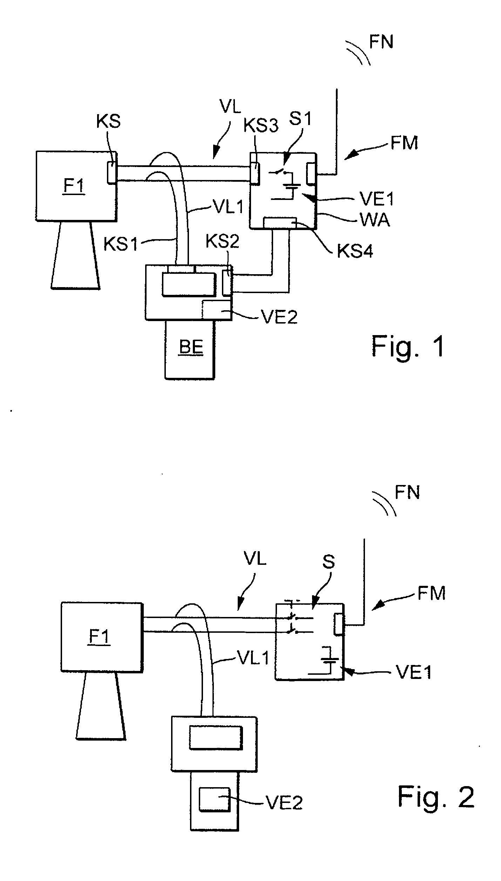

Fig. 1 zeigt eine schematische Darstellung einer ersten Ausgestaltung der erfindungsgemäßen Vorrichtung. Das Feldgerät F1 ist über die

Kommunikationsschnittstellen KS, KS3 und die beiden Verbindungsleitungen VL mit einem Wireless Adapter WA verbunden. Über die Zweidrahtleitung VL erfolgt sowohl die digitale Kommunikation, also der Austausch von Daten, zwischen dem Feldgerät F1 und dem Wireless Adapter WA als auch die Energieversorgung des Feldgeräts F1 von der Versorgungseinheit VE1 des Wireless Adapters WA her. Die digitale Kommunikation des Feldgeräts F1 mit der übergeordneten Steuereinheit oder mit weiteren Teilnehmern des Funknetzwerks FN - diese sind in der Fig. 1 nicht gesondert dargestellt - erfolgt über das Funkmodul FM, das bevorzugt in den Wireless Adapter WA integriert ist. Der Wireless Adapter WA ist so ausgebildet, dass er einen der in der Automatisierungstechnik bekannten Kommunikationsstandards unterstützt. Beispielsweise handelt es sich um einen wirelessHART® Adapter.

Das Bediengerät BE bzw. das Handheld weist zwei Kommunikationsschnittstellen KS1, KS2 auf, an die die Verbindungsleitungen VL1 und VL2 angeschlossen sind. Über die Verbindungsleitung VL1, die an die Verbindungsleitung VL zwischen Feldgerät F1 und Wireless Adapter WA angeschlossen sind, werden die digitalen Daten zwischen dem Feldgerät F1 und dem Wireless Adapter WA kommuniziert. Die Datenkommunikation erfolgt passiv an der Verbindung zwischen Wireless Adapter WA und Feldgerät F1. Über die Verbindungsleitungen VE2 erfolgt die Energieversorgung des Wireless Adapters WA von der dem Bediengerät BE zugeordneten Versorgungseinheit VE2 her. Während eines Bedienvorgangs wird die Versorgungseinheit VE1, die dem Wireless Adapter WA zugeordnet ist, abgetrennt, so dass die Energieversorgung des Feldgeräts F1 ausschließlich über die Versorgungseinheit VE2 des Bediengeräts BE erfolgt. In der Fig. 1 ist dieser Modus durch den geöffneten Schalter S1 skizziert.

Fig. 2 zeigt eine schematische Darstellung einer zweiten Ausgestaltung der erfindungsgemäßen Vorrichtung. Von der in Fig. 1 gezeigten Ausgestaltung unterscheidet sich diese Ausgestaltung im Wesentlichen dadurch, dass die nunmehr aktive digitale Kommunikation und die Energieversorgung über dasselbe Leitungspaar VL1 zwischen dem Bediengerät BE und dem Feldgerät F1 erfolgen. Bevorzugt wird bei dieser Ausgestaltung die Versorgungseinheit VE1 des Wireless Adapters WA automatisch mittels eines entsprechenden Steueralgorithmus' bei Anschließen des Bediengeräts BE getrennt. Wenn die elektronischen Schalter S geöffnet sind, so ist die Energieversorgung von dem Wireless Adapter WA her unterbrochen und die Speisung erfolgt ausschließlich über die Versorgungseinheit VE2 des angeschlossenen Bediengeräts BE. Alternativ kann die Abtrennung der in dem Wireless Adapter WA angeordneten Versorgungseinheit VE1 mittels eines mechanischen Schalters erfolgen, der vom Bedienpersonal betätigt wird.

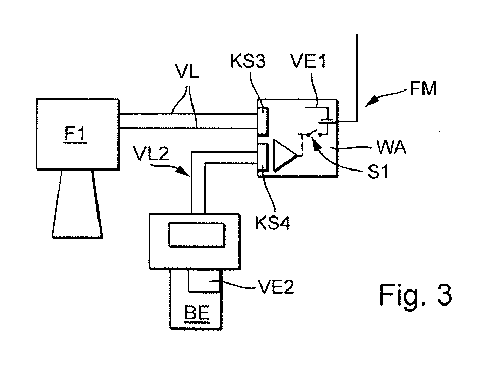

Die in Fig. 3 gezeigte dritte Ausgestaltung der erfindungsgemäßen Vorrichtung weist zwei Verbindungsleitungen VL2 auf, die vom Bediengerät BE zu dem Wireless Adapter WA geführt sind. In dieser Ausgestaltung besitzt der Wireless Adapter ebenso wie in der in Fig. 1 gezeigten Ausgestaltung eine zweite Kommunikationsschnittstelle KS 4. Über die Verbindungsleitungen VL2 erfolgt sowohl die digitale Kommunikation als auch die Energieversorgung von der Versorgungseinheit VE2 des Bediengeräts BE her. Wird der Wireless Adapter WA über die Verbindungsleitung VL2 mit dem Bediengerät BE verbunden, so wird wiederum bevorzugt automatisch ein elektronischer Schalter S1 aktiviert und die Energieversorgung von der Versorgungseinheit VE1 des Wireless Adapters WA wird abgetrennt. Somit erfolgt die Energieversorgung des Feldgeräts F1 ausschließlich über die Versorgungseinheit VE2, die dem Bediengerät BE zugeordnet ist. Nach Beendigung des Bedienvorgangs wird das Bediengerät BE wieder von dem Wireless Adapter WA getrennt und die Energieversorgung erfolgt über die Versorgungseinheit VE1, die dem Wireless Adapter WA zugeordnet ist.

In jedem der o.g. Beispiele kann die Energieversorgung während eines Bedienvorgangs auch von einem speisenden Modem anstelle des speisenden Bediengeräts BE übernommen werden.

## Patentansprüche

1. Vorrichtung zum Bedienen eines Feldgeräts (F1) oder eines Wireless Adapters (WA), das in ein Funknetzwerk der Automatisierungstechnik eingebunden ist, wobei an dem Feldgerät (F1) eine Kommunikationsschnittstelle (KS) angebracht ist, wobei ein Wireless-Adapter (WA) über eine Verbindungsleitung (VL) an die Kommunikationsschnittstelle (KS) des Feldgeräts (F1) angeschlossen ist, wobei dem Wireless-Adapter (WA) eine erste Versorgungseinheit (VE1) zugeordnet ist, und wobei der Wireless-Adapter (WA) das Feldgerät (F1) über die Verbindungsleitung (VL) und die Kommunikationsschnittstelle (KS) mit elektrischer Leistung versorgt,
**dadurch gekennzeichnet,**
**dass** ein Bediengerät (BE) mit einer zweiten Versorgungseinheit (VE2) vorgesehen ist, das zwecks Bedienen des Feldgeräts (F1) an die Verbindungsleitung (VL) zwischen Feldgerät (F1) und Wireless-Adapter (WA) anklemmbar ist, und
**dass** ein Schalter (S) vorgesehen ist, der im Falle eines an dem Feldgerät (F1) durchzuführenden bzw. durchgeführten Bedienvorgangs die Energieversorgung des Feldgeräts (F1) über den Wireless-Adapter (WA) unterbricht und die zweite Versorgungseinheit (VE2) aktiviert, so dass während des Bedienvorgangs die Energieversorgung des Feldgeräts (F1) über das Bediengerät (BE) erfolgt.

2. Vorrichtung zum Bedienen eines Feldgeräts (F1) oder eines Wireless Adapters (WA), das bzw. der in ein Funknetzwerk der Automatisierungstechnik eingebunden ist, wobei an dem Feldgerät (F1) eine Kommunikationsschnittstelle (KS) angebracht ist, wobei ein Wireless-Adapter (WA) über eine Verbindungsleitung (VL) an die Kommunikations-schnittstelle (KS) des Feldgeräts (F1) angeschlossen ist, wobei dem Wireless-Adapter (WA) eine erste Versorgungseinheit (VE1) zugeordnet ist, und wobei der Wireless-Adapter (WA) das Feldgerät (F1) über die Verbindungsleitung (VL) und die Kommunikationsschnittstelle (KS) mit elektrischer Leistung versorgt,
**dadurch gekennzeichnet,**
**dass** der Wireless-Adapter (WA) eine zusätzliche Kommunikationsschnittstelle (KS4) besitzt,
**dass** ein Bediengerät (BE) mit einer zweiten Versorgungseinheit (VE2) vorgesehen ist, das zwecks Bedienen des Feldgeräts (F1) an die Kommunikationsschnittstelle (KS4) des Wireless-Adapter (WA) anklemmbar ist, und
**dass** eine Steuerung vorgesehen ist, die im Falle eines an dem Feldgerät (F1) durchzuführenden bzw. durchgeführten Bedienvorgangs die Energieversorgung des Feldgeräts (F1) über den Wireless-Adapter (WA) drosselt oder unterbricht und die zweite Versorgungseinheit aktiviert, so dass während des Bedienvorgangs die Energieversorgung des Feldgeräts (F1) zumindest teilweise über das Bediengerät (BE) erfolgt.

3. Vorrichtung zum Bedienen eines Feldgeräts (F1), das in ein Funknetzwerk (FN) der Automatisierungstechnik eingebunden ist, wobei an dem Feldgerät (F1) eine Kommunikationsschnittstelle (KS) angebracht ist und wobei dem Feldgerät (F1) eine erste Versorgungseinheit (VE1) zugeordnet ist, die das Feldgerät (F1) mit elektrischer Leistung versorgt,
**dadurch gekennzeichnet,**
**dass** ein Bediengerät (BE) mit einer zweiten Energieversorgungseinheit (VE2) vorgesehen ist, wobei das Bediengerät (BE) zwecks Bedienen des Feldgeräts (F1) an die Kommunikationsschnittstelle (KS) des Feldgeräts (F1) anklemmbar ist, und
**dass** eine Steuerung vorgesehen ist, die im Falle eines an dem Feldgerät (F1) durchzuführenden bzw. durchgeführten Bedienvorgangs die Energieversorgung des Feldgeräts (F1) über die erste Versorgungseinheit (VE1) drosselt oder unterbricht und die zweite Versorgungseinheit (VE2) aktiviert, so dass während des Bedienvorgangs die Energieversorgung des Feldgeräts (F1) zumindest teilweise über das Bediengerät (BE) erfolgt.

4. Vorrichtung nach Anspruch 1 oder 2,
**dadurch gekennzeichnet,**
**dass** es sich bei der Verbindungsleitung (VL) zwischen Wireless-Adapter (WA) und Feldgerät (F1) um eine erste Zweidrahtleitung handelt, wobei die Kommunikation und die Energieversorgung über die erste Zweidrahtleitung erfolgen.

5. Verfahren nach Anspruch 1, 2 oder 4,
**dadurch gekennzeichnet,**
**dass** das Bediengerät über eine zweite Zweidrahtleitung (VL1) an die erste Zweidrahtleitung (VL) angeklemmt ist und wobei die Kommunikation und die Energieversorgung über die erste Zweidrahtleitung (VL) und die zweite Zweidrahtleitung (VL1) erfolgen.

6. Vorrichtung nach Anspruch 2,
**dadurch gekennzeichnet,**
**dass** das Bediengerät (BE) eine Zweidrahtleitung (VL2) aufweist, die an die Kommunikationsschnittstelle (KS4) angeklemmt ist und wobei die Kommunikation und die Energieversorgung über die Zweidrahtleitung (VL2) erfolgen.

7. Vorrichtung nach Anspruch 1,
**dadurch gekennzeichnet,**
**dass** das Bediengerät (BE) eine Vierdrahtleitung (VL1, VL2) aufweist, wobei zwei Kommunikationsleitungen (VL1) an die erste Zweidrahtleitung (VL) angeklemmt sind und dass zwei Versorgungsleitungen (VL2) über eine Kommunikationsschnittstelle (KS4) mit dem Wireless-Adapter (WA) verbunden sind, so dass die Kommunikation und die Energieversorgung über zwei getrennte Leitungspaare (VL1, VL2) erfolgt.

8. Vorrichtung nach Anspruch 1,2 oder 3,
**dadurch gekennzeichnet,**
**dass** ein Funkmodul (FM) zur Kommunikation über das Funknetzwerk (FN) vorgesehen ist, wobei das Funkmodul (FM) in das Feldgerät (F1) oder - im Falle der Verwendung eines Wireless-Adapters (WA) - in den Wireless-Adapter (WA) integriert ist.

9. Vorrichtung nach einem oder mehrerer der Ansprüche 1-8,
**dadurch gekennzeichnet**,
wobei es sich bei dem Bediengerät (BE) um ein Handheld oder um ein Modem handelt.

10. Vorrichtung nach Anspruch 1,2 oder 3,
**dadurch gekennzeichnet,**
**dass** es sich bei dem Bedienvorgang um einen Vorgang mit hohem Leistungsverbrauch, insbesondere um eine Inbetriebnahme des Feldgeräts (F1), um eine Parametrierung bzw. Konfigurierung des Feldgeräts (F1) oder um eine an dem Feldgerät (F1) durchgeführte Diagnose handelt.

11. Vorrichtung nach Anspruch 1,2 oder 3,
**dadurch gekennzeichnet,**
**dass** es sich bei der ersten Versorgungseinheit (VE1) und/oder der zweiten Versorgungseinheit (VE2) um eine Batterie, einen Akku oder eine Brennstoffzelle handelt.

12. Vorrichtung nach Anspruch 1,2 oder 3,
**dadurch gekennzeichnet,**
**dass** die Steuerung zwecks Umschaltung von der Speisung des Feldgeräts (F1) durch die erste Versorgungseinheit (VE1) auf die Speisung des Feldgeräts (F1) durch die zweite Versorgungseinheit (VE2) einen mechanischen oder einen elektronischen Schalter (S) betätigt.

13. Vorrichtung nach Anspruch 1, 2, 3, 10 oder 12,
**dadurch gekennzeichnet,**
**dass** die Steuerung nach Beendigung des Bedienvorgangs die Speisung des Feldgeräts (F1) wieder auf die erste Versorgungseinheit (VE1) umschaltet.

## Claims

1. Unit for operating a field device (F1) or a wireless adapter (WA), which is integrated into an automation engineering wireless network, wherein a communication interface (KS) is fitted on the field device (F1), wherein a wireless adapter (WA) is connected to the communication interface (KS) of the field device (F1) via a connecting cable (VL),
wherein a first power supply unit (VE1) is assigned to the wireless adapter (WA), and
wherein the wireless adapter (WA) supplies electrical energy to the field device (F1) via the connection cable (VL) and the communication interface (KS),
**characterized in that**
an operating device (BE) with a second power supply unit (VE2) is provided, and said operating device can be attached to the connection cable (VL) between the field device (F1) and the wireless adapter (WA) for the purpose of operating the field device (F1), and a switch (S) is provided which - if an operating routine is performed or to be performed on the field device (F1) - interrupts the energy supplied to the field device (F1) via the wireless adapter (WA) and activates the second power supply unit (VE2) so that energy is supplied to the field device (F1) via the operating unit (BE) during the operating routine.

2. Unit for operating a field device (F1) or a wireless adapter (WA) which is integrated into an automation engineering wireless network, wherein a communication interface (KS) is fitted on the field device (F1), wherein a wireless adapter (WA) is connected to the communication interface (KS) of the field device (F1) via a connecting cable (VL),
wherein a first power supply unit (VE1) is assigned to the wireless adapter (WA), and
wherein the wireless adapter (WA) supplies electrical energy to the field device (F1) via the connection cable (VL) and the communication interface (KS),
**characterized in that**
the wireless adapter (WA) has an additional communication interface (KS4),
an operating device (BE) with a second power supply unit (VE2) is provided, and said operating device can be attached to the communication interface (KS4) of the wireless adapter (WA) for the purpose of operating the field device (F1), and
a control system is provided which - if an operating routine is performed or to be performed on the field device (F1) - interrupts or reduces the energy supplied to the field device (F1) via the wireless adapter (WA) and activates the second power supply unit so that energy is supplied - at least partially - to the field device (F1) via the operating unit (BE) during the operating routine.

3. Unit for operating a field device (F1) which is integrated into an automation engineering wireless network (FN), wherein a communication interface (KS) is fitted on the field device (F1) and wherein a first power supply unit (VE1) is assigned to the field device (F1) which supplies power to the field device (F1),
**characterized in that**
an operating device (BE) with a second power supply unit (VE2) is provided, and said operating device (BE) can be attached to the communication interface (KS) of the field device (F1) for the purpose of operating the field device (F1), and
a control system is provided which - if an operating routine is performed or to be performed on the field device (F1) - interrupts or reduces the energy supplied to the field device (F1) via the first power supply unit (VE1) and activates the second power supply unit (VE2) so that energy is supplied - at least partially - to the field device (F1) via the operating unit (BE) during the operating routine.

4. Unit as claimed in Claim 1 or 2,
**characterized in that**
the connection cable (VL) between the wireless adapter (WA) and the field device (F1) is a first two-wire cable, wherein communication takes place and power is supplied via the first two-wire cable.

5. Unit as claimed in Claim 1, 2 or 4,
**characterized in that**
the operating unit is connected to the first two-wire cable (VL1) via a second two-wire cable (VL1) and wherein communication takes place and power is supplied via the first two-wire cable (VL) and the second two-wire cable (VL1).

6. Unit as claimed in Claim 2,
**characterized in that**
the operating device (BE) has a two-wire cable (VL2) which is fitted to the communication interface (KS4) and wherein communication takes place and power is supplied via the two-wire cable (VL2).

7. Unit as claimed in Claim 1,
**characterized in that**
the operating device (BE) has a four-wire cable (VL1, VL2), wherein two communication cables (VL1) are connected to the first two-wire cable (VL), and **characterized in that** two power supply cables (VL2) are connected to the wireless adapter (WA) via a communication interface (KS4) such that communication takes place and energy is supplied via two separate pairs of wires (VL1, VL2).

8. Unit as claimed in Claim 1, 2 or 3,
**characterized in that**
a wireless module (FM) is provided for communication via the wireless network (FN), wherein the wireless module (FM) is integrated in the field device (F1) or - if using a wireless adapter (WA) - is integrated in the wireless adapter (WA).

9. Unit as claimed in one or more of the Claims 1-8,
**characterized in that**
the operating device (BE) is a handheld or a modem.

10. Unit as claimed in Claim 1, 2 or 3,
**characterized in that**
the operating routine is a routine involving a high level of power consumption, particularly the commissioning of the field device (F1), the configuration or parameterization of the field device (F1) or a diagnostics routine performed on the field device (F1).

11. Unit as claimed in Claim 1, 2 or 3,
**characterized in that**
the first power supply unit (VE1) and/or the second power supply unit (VE2) is a battery, a storage battery or a fuel cell.

12. Unit as claimed in Claim 1, 2 or 3,
**characterized in that**
the control system actuates a mechanical or an electronic switch (S) to switch the power supply to the field device (F1) from the first power supply unit (VE1) to the second power supply unit (VE2).

13. Unit as claimed in Claim 1, 2, 3, 10 or 12,
**characterized in that**
the control system switches the field device (1) power supply back to the first power supply unit (VE1) when the operating routine is finished.

## Revendications

1. Dispositif destiné à la commande d'un appareil de terrain (F1) ou d'un adaptateur sans fil (WA), qui est intégré dans un réseau sans fil de la technique d'automatisation, une interface de communication (KS) étant présente sur l'appareil de terrain (F1), un adaptateur sans fil (WA) étant raccordé à l'interface de communication (KS) de l'appareil de terrain (F1) par l'intermédiaire d'un câble de liaison (VL), une première unité d'alimentation (VE1) étant affectée à l'adaptateur sans fil (WA), et l'adaptateur sans fil (WA) alimentant l'appareil de terrain (F1) par le biais du câble de liaison (VL) et l'interface de communication (KS) avec une puissance électrique,
**caractérisé en ce**
**qu'**est prévu un appareil de commande (BE) avec une deuxième unité d'alimentation (VE2), lequel peut être raccordé à des fins de commande de l'appareil de terrain (F1) au câble de liaison (VL) entre l'appareil de terrain (F1) et l'adaptateur sans fil (WA), et en ce qu'est prévu un interrupteur (S) qui, en cas d'un processus de commande à exécuter ou exécuté sur l'appareil de terrain (F1), interrompt l'alimentation en énergie de l'appareil de terrain (F1) par le biais de l'adaptateur sans fil (WA) et active la deuxième unité d'alimentation (VE2), si bien que l'alimentation en énergie de l'appareil de terrain (F1) est assurée par l'intermédiaire de l'appareil de commande (BE) pendant le processus de commande.

2. Dispositif destiné à la commande d'un appareil de terrain (F1) ou d'un adaptateur sans fil (WA), qui est intégré dans un réseau sans fil de la technique d'automatisation, une interface de communication (KS) étant présente sur l'appareil de terrain (F1), un adaptateur sans fil (WA) étant raccordé à l'interface de communication (KS) de l'appareil de terrain (F1) par l'intermédiaire d'un câble de liaison (VL), une première unité d'alimentation (VE1) étant affectée à l'adaptateur sans fil (WA), et l'adaptateur sans fil (WA) alimentant l'appareil de terrain (F1) par le biais du câble de liaison (VL) et l'interface de communication (KS) avec une puissance électrique,
**caractérisé en ce**
**que** l'adaptateur sans fil (WA) possède une interface de communication (KS4) supplémentaire,
**qu'**est prévu un appareil de commande (BE) avec une deuxième unité d'alimentation (VE2), lequel peut être raccordé à des fins de commande de l'appareil de terrain (F1) à l'interface de communication (KS4) de l'adaptateur sans fil (WA), et
**qu'**est prévu un système de commande qui, en cas d'un processus de commande à exécuter ou exécuté sur l'appareil de terrain (F1), réduit ou interrompt l'alimentation en énergie de l'appareil de terrain (F1) par le biais de l'adaptateur sans fil (WA) et active la deuxième unité d'alimentation (VE2), si bien que l'alimentation en énergie de l'appareil de terrain (F1) est assurée au moins partiellement par l'intermédiaire de l'appareil de commande (BE) pendant le processus de commande.

3. Dispositif destiné à la commande d'un appareil de terrain (F1), qui est intégré dans un réseau sans fil (FN) de la technique d'automatisation, une interface de communication (KS) étant présente sur l'appareil de terrain (F1) et une première unité d'alimentation (VE1) étant affectée à l'appareil de terrain (F1), laquelle alimente l'appareil de terrain (F1) en puissance électrique,
**caractérisé en ce**
**qu'**est prévu un appareil de commande (BE) avec une deuxième unité d'alimentation (VE2), l'appareil de commande (BE) pouvant être raccordé à des fins de commande de l'appareil de terrain (F1) à l'interface de communication (KS) de l'appareil de terrain (F1),
et
en ce qu'est prévu un système de commande qui, en cas d'un processus de commande à exécuter ou exécuté sur l'appareil de terrain (F1), réduit ou interrompt l'alimentation en énergie de l'appareil de terrain (F1) par le biais de la première unité d'alimentation (VE1) et active la deuxième unité d'alimentation (VE2), si bien que l'alimentation en énergie de l'appareil de terrain (F1) est assurée au moins partiellement par l'intermédiaire de l'appareil de commande (BE) pendant le processus de commande.

4. Dispositif selon la revendication 1 ou 2,
**caractérisé en ce**
**que**, concernant le câble de liaison (VL) entre l'adaptateur sans fil (WA) et l'appareil de terrain (F1), il s'agit d'un premier câble bifilaire, la communication et l'alimentation en énergie étant assurées par l'intermédiaire du premier câble bifilaire.

5. Dispositif selon la revendication 1, 2 ou 4,
**caractérisé en ce**
**que** l'appareil de commande est raccordé par le biais d'un deuxième câble bifilaire (VL1) au premier câble bifilaire (VL), et la communication et l'alimentation en énergie étant assurées par l'intermédiaire du premier câble bifilaire (VL) et du deuxième câble bifilaire (VL1).

6. Dispositif selon la revendication 2,
**caractérisé en ce**
**que** l'appareil de commande (BE) comprend un câble bifilaire (VL2), qui est raccordé à l'interface de communication (KS4), et la communication et l'alimentation en énergie étant assurées par l'intermédiaire du câble bifilaire (VL2).

7. Dispositif selon la revendication 1,
**caractérisé en ce**
**que** l'appareil de commande (BE) comprend un câble quadrifilaire (VL1, VL2), deux câbles de communication (VL1) étant raccordés au premier câble bifilaire (VL), et en ce que deux câbles d'alimentation (VL2) sont reliés avec l'adaptateur sans fil (WA) par l'intermédiaire d'une interface de communication (KS4), si bien que la communication et l'alimentation en énergie sont assurées par le biais de deux paires de conducteurs (VL1, VL2) séparées.

8. Dispositif selon la revendication 1, 2 ou 3,
**caractérisé en ce**
**qu'**est prévu un module sans fil (FM) destiné à la communication via le réseau sans fil (FN), le module sans fil (FM) étant intégré dans l'appareil de terrain (F1) ou - en cas d'utilisation d'un adaptateur sans fil (WA) - dans l'adaptateur sans fil (WA).

9. Dispositif selon l'une ou plusieurs des revendications 1 à 8,
**caractérisé en ce**
**que**, concernant l'appareil de commande (BE), il s'agit d'un terminal portatif ou d'un modem.

10. Dispositif selon la revendication 1, 2 ou 3,
**caractérisé en ce**
**que**, concernant le processus de commande, il s'agit d'un processus avec une consommation de puissance élevée, notamment d'une mise en service de l'appareil de terrain (F1), d'un paramétrage ou d'une configuration de l'appareil de terrain (F1) ou d'un diagnostic effectué sur l'appareil de terrain (F1).

11. Dispositif selon la revendication 1, 2 ou 3,
**caractérisé en ce**
**que**, concernant la première unité d'alimentation (VE1) et/ou la deuxième unité d'alimentation (VE2), il s'agit d'une batterie, d'un accumulateur ou d'une cellule de combustible.

12. Dispositif selon la revendication 1, 2 ou 3,
**caractérisé en ce**
**que** le système de commande actionne, à des fins de commutation de l'alimentation de l'appareil de terrain (F1) par la première unité d'alimentation (VE1) sur l'alimentation de l'appareil de terrain (F1) par la deuxième unité d'alimentation (VE2), un interrupteur (S) mécanique ou électronique.

13. Dispositif selon la revendication 1, 2, 3, 10 ou 12,
**caractérisé en ce**
**que** le système de commande commute de nouveau l'alimentation de l'appareil de terrain (F1) sur la première unité d'alimentation (VE1) au terme du processus de commande.
